# EUROPÄISCHE PATENTSCHRIFT

(11) **EP 2 081 744 B1**
(45) Veröffentlichungstag und Bekanntmachung des Hinweises auf die Patenterteilung: **28.07.2010**
(21) Anmeldenummer: 07846322.1
(22) Anmeldetag: 12.11.2007
(51) Int. Cl.: B28B 1/00, C04B 35/624, C04B 35/626, C04B 38/00

(54) **VERFAHREN ZUR HERSTELLUNG EINES KERAMISCHEN FORMKÖRPERS**
METHOD FOR PRODUCTION OF A CERAMIC MOULDED BODY
PROCÉDÉ DE RÉALISATION D'UN CORPS MOULÉ CÉRAMIQUE

(30) Priorität: 23.11.2006 DE 102006055281
(43) Veröffentlichungstag der Anmeldung: 29.07.2009
(73) Patentinhaber: Universität Bremen, 28359 Bremen (DE)
(72) Erfinder: HENKEL, Lars, 28203 Bremen (DE); SOLTMANN, Christian, 28259 Bremen (DE); ANDRESEN, Lars, 28757 Bremen (DE); KOCH, Dietmar, 28359 Bremen (DE); GRATHWOHL, Georg, 28207 Bremen (DE)
(74) Vertreter: Scholz, Volker
(86) Internationale Anmeldenummer: PCT/DE2007/002038
(87) Internationale Veröffentlichungsnummer: WO 2008/061495

(56) Entgegenhaltungen:
- WO-A-2004/106040
- WO-A-2007/107571
- US-A1- 2002 167 100

## Beschreibung

Die vorliegende Erfindung betrifft ein Verfahren zur Herstellung eines keramischen Formkörpers.

Verfahren zur Herstellung von keramischen Formkörpern aus Nanosol-haltigen Schlickern und die Gelierung in einen Grünkörper sind hinlänglich bekannt. Ebenfalls bekannt sind verschiedene Verfahren zur Herstellung von beliebig geformten dreidimensionalen Körpern auf Basis von Computerdateien (z.B. CAD), beispielsweise als Diskussion-, Anschauungs-, Design- oder Funktionsmodell. Solche Verfahren sind unter der Bezeichnung "Rapid Prototyping" oder "Rapid Manufacturing" bekannt und Fachleuten geläufig. Bei den meisten dieser Verfahren werden die dreidimensionalen Objekte schichtweise aufgebaut.

Die Technik des Rapid Prototyping (RP) hat ihre Anfänge in den 80er Jahren und ist mittlerweile in weiten Bereichen der industriellen Fertigung etabliert. Der Grundgedanke dieser Technik lautet, durch eine völlig neuartige Gestaltung der Formkörpererzeugung auf den aufwändigen Formenbau verzichten zu können und so die Entwicklungsdauer und den Preis erheblich zu senken. Erste Anlagen zum Rapid Prototyping wurden für den Kunststoffbau entwickelt, jedoch kamen später weitere Materialien hinzu. Zumeist werden flüssige, pulverförmige oder pastöse Stoffe im Rapid Prototyping durch Schmelzen oder Binden in den gewünschten Aggregatzustand gebracht und daraus schichtweise das Modell aufgebaut. Diese Form des Erzeugens von Formkörpern bringt verschiedene Vorteile mit sich. Das geforderte Produkt kann direkt aus CAD-Daten generiert werden, dadurch entfällt ein aufwändiger Formenbau eines Negativabdrucks. Die Herstellung des Modells geschieht schichtweise und inkrementell. Hohlräume und Hinterschnitte können durch Einbau von Stützen leicht erzeugt werden. Auf diese Weise entstehen Modelle, die Gußmodelle in ihrer Komplexität weit übertreffen und sehr filigrane Strukturen aufweisen können. Neben dem bislang bevorzugten Einsatz von Kunststoffen und Werkstoffen auf Paraffin-Basis wurden ebenfalls Werkstoffe auf Basis von Metallpulver entwickelt, die durch Schmelzen oder Kleben einen festen Verbund bilden.

Aus der DE 102 52 564 A1 ist ein Rapid-Prototyping-Verfahren bekannt, welches auf der Vernetzung organischer Polymere beruht. Die Polymerisation kann durch Veränderung des pH-Wertes ausgelöst werden.

WO 01/78968 A1 beschreibt ein Verfahren zum Herstellen von dreidimensionalen Objekten, bei dem ein aushärtbares Medium über einen dreidimensional beweglichen Dispenser in ein zweites, nicht gasförmiges Medium abgegeben wird und nach der Abgabe aushärten kann.

WO O1/26885 A1 beschreibt ein RP-Verfahren, bei dem die Aushärtung des Ausgangsmaterials in einem Tauchbad durch Kühlung erfolgt. Als Ausgangsmaterialien werden Wachs, Harz oder andere thermoplastische Stoffe erwähnt.

US-A1-2002/167100 offenbart ein RP-Verfahren, worin ein flüssiger oder pastöser, keramischen Schlecker mit einem Nanosol als Bestandteil auf einen Träger aufgetragen wird.

Der Einsatz von keramischen RP-Werkstoffen hat sich noch nicht durchgesetzt. Bislang werden hier keramische Pulver zusammen mit organischen Bindemitteln verwendet, die beim späteren Brennen des Grünkörpers herausgebrannt werden und somit eine gewisse Materialschwindung und eine hohe Porosität des Formkörpers bewirken. Dies ist jedoch gerade für die Herstellung von endkonturnahen Formkörpern nachteilig.

Der Erfindung liegt die Aufgabe zugrunde, ein Verfahren zur Herstellung eines keramischen Formkörpers auf Basis des Rapid Prototyping bzw. Rapid Manufacturing bereitzustellen, das die Nachteile des Stands der Technik überwindet. Insbesondere soll ein Verfahren bereitgestellt werden, das auf einfache und kostengünstige Weise zu endkonturnahen keramischen Formteilen führt.

Die Aufgabe wird erfindungsgemäß gelöst durch ein Verfahren zur Herstellung eines keramischen Formkörpers nach Anspruch 1.

Der Erfindung liegt die überraschende Erkenntnis zugrunde, daß keramische Formkörper auf einfache und kostengünstige Weise in einer endkonturnahen Gestalt hergestellt werden können durch ein R.P-Verfahren, bei dem es wesentlich ist, daß die Auftragung des flüssigen, Nanosol-haltigen, keramischen Schlickers außerhalb bzw. oberhalb des Konsolidierungsflüssigkeitsbades erfolgt. Erst nach Auftragung des Schlickers wird dieser, zumindest teilweise, in das Konsolidierungsflüssigkeitsbad abgesenkt, wo eine Konsolidierung über eine Verschiebung des pH-Wertes der Konsolidierungsflüssigkeit oder eine Absenkung der Temperatur erzielt werden kann.

Für das erfindungsgemäße Verfahren werden vorzugsweise Si-Sole eingesetzt. Hiermit sind Sole bezeichnet, deren Kolloide hauptsächlich aus Siliziumoxid bestehen. Bei Solen dieser stofflichen Zusammensetzung, die gefriersensible Eigenschaften aufweisen, ist das Auftauen der erzeugten Modelle oberhalb des Gefrierpunktes von Wasser möglich, ohne dass ein Sublimationsvsrfahren eingesetzt werden muss, bei dem dem Bauteil unter Vakuum das Wasser ohne Flüssigphasenzustand entzogen wird. Es handelt sich bei dem erfindungsgemäß eingesetzten Sol demnach um eine kolloidale Lösung, in der ein fester Stoff in feinster Verteilung in einem flüssigen oder pastösen Medium dispergiert ist. Die Teilchengröße des festen Stoffes liegt dabei im Nanometerbereich, das heißt bei einer Teilchengröße von unter 1µm.

Der für das Verfahren einzusetzende Schlicker beinhaltet als Hauptbestandteil und entscheidende Schlickerkomponente für die Konsolidierung das oben genannte SiO₂. Hinzu kommen gegebenenfalls Füllstoffe, um den Feststoffgehalt heraufzusetzen. Da die Füllstoffe nicht an der Konsolidierungsreaktion beteiligt sind, gibt es für deren chemische Zusammensetzung keine Einschränkungen. Bei der Herstellung klassische keramischer Produkte werden vorzugsweise keramische Füllstoffe eingesetzt. Dies ist jedoch keine zwingende Notwendigkeit. Beispielsweise können metallische Pulver oder organische Kurzfasem zur Einstellung mechanischer Eigenschaften in den Schlicker eingerührt werden.

In dem erfindungsgemäßen Verfahren wird daher ein flüssiger oder pastöser keramischer Schlicker eingesetzt, der neben Füllstoffen aus einem Kieselsol aufgebaut ist, bei dem die Sol-Partikel in einer Teilchengröße im Nanometerbereich vorliegen.

Seitens der Erfinder wurde festgestellt, daß die Auftragung des Schlickers oberhalb des Konsolidierungsflüssigkeitsbades wesentlich ist. Zum einen wurde gefunden, daß eine Benetzung der Oberfläche verhindert werden muß, da sich sonst darauf eine flüssige Sperrschicht der Konsolidierungsflüssigkeit bildet. Zum anderen darf für eine optimale Haftung von neu aufgebauten Schichten das zuvor aufgebrachte Schlickermaterial im Kontaktbereich noch nicht komplett verfestigt sein. Wesentlich ist somit, daß oberflächennahe Schlickerbereiche nicht in das Flüssigkeitsbad eintauchen.

Besonders bevorzugt ist, daß der Schlicker schichtweise aufgetragen wird und bevorzugt der als Arbeitsebene bezeichnete Teil eine bzw. mehrere zuletzt aufgetragene Schicht(en) umfaßt.

Besonders bevorzugt ist, daß auf die erste Arbeitsebene eine oder mehrere weitere Schichten des Schlickers aufgetragen werden, die eine oder mehrere neue Arbeitsebene(n) definieren und die erste Arbeitsebene bzw. die nicht obersten Arbeitsebenen in das Konsolidierungsflüssigkeitsbad abgesenkt wird bzw. werden.

In hohem Maße ist also bevorzugt, daß die oberflächennahen Schlickerteilbereiche nicht in das Flüssigkeitsbad eintauchen. Insbesondere wird das Verfahren so gesteuert, daß der entstehende Gradient zwischen dem Konsolidierungsflüssigkeitsbad und einer Arbeitsebene oberhalb des Bades eine Verfestigung der Modellgeometrie bis unterhalb der Arbeitsebene ermöglicht. Das Konsolidisrungsflüssigkeitsbad ermöglicht dabei eine genaue räumliche Kontrolle des Fortschreitens der Konsolidierungsfront. Durch das Konsolidieren des Schlickers, d.h. der aufgebauten Schichten, wird eine irreversible Verfestigung des Formkörpers erreicht.

Es ist offensichtlich, daß die Höhe der Arbeitsebene, d.h. die Anzahl der aufgetragenen, noch nicht in das Konsolidierungsbad abgesenkten Schlickerbereiche (Schichten), von verschiedenen Faktoren abhängen kann, wie beispielsweise den Konsoldierungsbedingungen, dem verwendeten Schlicker, der Viskosität des Schlickers, dem bereits vorliegenden Überstand des herzustellenden Formkörpers oberhalb des Konsolidierungsflüssigkeitsbades, d.h. der Höhe des Formteils bzw. Schlickers, die nicht im Bad eingetaucht ist, etc. Eine geeignete Höhe der Arbeitsebene kann von Fachleuten auf dem Gebiet durch einfache Versuche ermittelt werden.

Das erfindungsgemäße Verfahren läuft demnach bevorzugt so ab, daß nach und nach Schichten des keramischen Schlickers aufgebracht werden, der Träger jedoch nach und nach abgesenkt wird, um erstellte Schichten zu konsolidieren. Oberhalb des Konsolidierungsflüssiglceitsbades können jedoch stets weitere Schichten aufgetragen werden, die eine neue Arbeitsebene definieren, die, nach Auftrag weiterer Schichten, ebenfalls in das Konsolidierungsbad abgesenkt wird, usw.. Wichtig ist in diesem Zusammenhang jedoch, daß stets eine Arbeitsebene oberhalb des Konsolidierungsbades verbleibt, die noch nicht vollständig konsolidiert ist.

Ebenfalls wird erfindungsgemäß bevorzugt vorgesehen, daß der Schlicker durch eine Düse tropfenförmig oder bahnförmig extrudiert wird.

Auch wird bevorzugt vorgeschlagen, daß das Auftragen des Schlickers kontinuierlich oder diskontinuierlich erfolgt.

Es ist ferner vorgesehen, daß das Auftragen des Schlickers kontinuierlich oder diskontinuierlich erfolgt.

In einer weiteren Ausführungsform wird vorgeschlagen, daß nach vollständiger Konsolidierung der Formkörper aus dem Konsolidierungsflüssigkeitsbad entfernt und die Konsolidierungsflüssigkeit von dem Formkörper entfernt wird.

Dabei ist besonders bevorzugt, daß das Entfernen der Konsolidierungsflüssigkeit durch Erwärmen des Formkörpers auf maximal 80°C erfolgt.

Ebenfalls ist es bevorzugt, daß der hergestellte Formkörper gesintert wird, vorzugsweise bei einer Temperatur von unterhalb 1.400°C.

Erfindungsgemäß kann auch vorgesehen sein, daß das eingesetzte Nanosol eine Teilchengröße von 5 bis 100 nm aufweist.

Bevorzugt ist, daß die nicht konsolidierte Arbeitsebene oberhalb des Konsolidierungsflüssigkeitsbades eine Dicke von 0,1 mm bis 7 mm aufweist.

Auch kann erfindungsgemäß vorgesehen sein, daß die Temperatur der Konsolidierungsflüssigkeit in (b) -5°C bis -40°C beträgt.

Schließlich wird ebenfalls bevorzugt vorgeschlagen, daß in (a) die Konsolidierungsflüssigkeit einen pH-Wert aufweist, der um mindestens 2,0 Punkte niedriger ist als der pH-Wert des-Schli- - ckers.

Der erfindungsgemäß hergestellte Formkörper weist bereits nach Entfernen aus dem Konsolidierungsbad und Entfernen der Konsolidierungsflüssigkeit eine hohe Festigkeit auf, die durch die Konsoldierungsbedingungen, durch die Zusammensetzung des Schlickers und insbesondere durch den Feststoffgehalt des Schlickers bestimmt wird. Im Verfahren können auf dem Fachgebiet übliche und bekannte Schlicker mit geeigneter Viskosität eingesetzt werden. Zur weiteren Erhöhung der Festigkeit kann der Formkörper nachträglich gesintert werden. Es wurde festgestellt, daß keine oder eine lediglich minimale Schwindung in Abhängigkeit von der Solkonzentration und der Schlickerzusammensetzung auftritt. Die Maßhaltigkeit der hergestellten Kontur hängt insbesondere von der Positioniergenauigkeit der eingesetzten Vorrichtung zur Auftragung des Schlickers ab. Auch wurde gefunden, daß der hergestellte Formkörper eine hohe, offene, jedoch sehr feine Porosität aufweist. Die erhaltenen Poren bringen mehrere Vorteile mit sich, zum einen wird der keramische Körper durch die Porosität thermoschockunempfindlich, zum anderen wird die spezifische Masse reduziert.

Im Formkörper notwendige Hinterschneidungen oder Kanalstrukturen, die für die Funktion des keramischen Formkörpers notwendig sein können, können mit dem erfindungsgemäßen Verfahren ebenfalls erzeugt werden. Beispielsweise können mit Hilfe einer zweiten Auftragungsvorrichtung gefrierende Wassertropfen entsprechend auf dem Träger platziert werden. Nach Erzeugung der dreidimensionalen Struktur wird das Lösungsmittel Wasser aus dem Werkstück durch Erwärmen bei maximal 80°C entfernt, um die entsprechenden Strukturen bereitzustellen.

Das erfindungsgemäße Verfahren zeichnet sich insbesondere durch eine hohe Variabilität der erzielbaren Formteilgeometrie und die Erzeugung von sonst nicht herstellbaren Geometrien (konturnahe Kühlkanäle, Hinterschneidungen) aus. Das Verfahren ist umweltfreundlich, da nur mit Wasser als Lösungsmittel gearbeitet wird. Die eingesetzten Rohstoffe sind günstig, und hervorzuheben ist die gezielte Einstellung der Porenstruktur durch Variation des Konsolidierungsverfahrens.

Mit dem erfindungsgemäßen Verfahren können beispielsweise Gußformen für Feinguß, Werkzeugeinsätze für Kunststoff- und Metallspritzguß, Kleinserien von keramischen Bauteilen, Funktionsmodelle und Prototypen, Werkzeuge für Blechumformung, komplexe Module für thermische Isolation, Bauteile für Filtrations- oder Membrantechnik sowie Bauteile für die Mikrosystemtechnik (z.B. Miniwärmetauscher) hergestellt werden. Von besonderer Bedeutung ist das erfindungsgemäße Verfahren im Bereich der Formgießerei und der Zahntechnik.

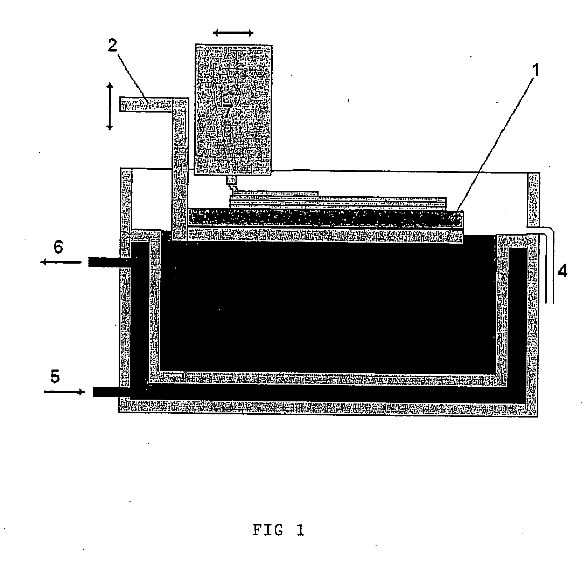

Die Erfindung wird nun beispielhaft und detailliert unter Bezugnahme auf die beigefügte Zeichnung beschrieben, in der Fig. 1 eine Vorrichtung zur Durchführung des erfindungsgemäßen Verfahrens zeigt.

Die in Fig. 1 gezeigte Vorrichtung zur Durchführung des Verfahrens umfaßt einen Träger 1, der über eine Absenkvorrichtung 2 in ein Konsolidierungsflüssigkeitsbad 3 abgesenkt oder daraus angehoben werden kann. In der in der Fig. 1 gezeigten Ausführungsform ist das Konsolidierungsflüssigkeitsbad 3 mit einem Überlauf 4 und einem Kühlkreislauf mit Zulauf 5 und Ablauf 6 bereitgestellt, um die Temperatur der Konsolidierungsflüssigkeit auf einen gewünschten Wert einstellen zu können. Oberhalb des Trägers 1 ist eine Extrusionsvorrichtung 7 mit einer Düse bereitgestellt, aus der der Nanosol-haltige keramische Schlicker abgegeben werden kann.

Im erfindungsgemäßen Verfahren wird Schlicker auf den Träger 1 oder eine bereits aufgebrachte Schicht oberhalb des Konsolidierungsflüssigkeitsbades 3 aufgetragen, wie es in Fig. 1 gezeigt ist. Sind die ersten Schichten auf den Träger 1 aufgebracht, wird die Absenkvorrichtung 2 betätigt und der Träger mit den Schichten zumindest teilweise in das Konsolidierungsflüssigkeitsbad 3 abgesenkt, wo eine Konsolidierung des Schlickers entweder durch Temperatur- oder pH-Wert-Änderung stattfindet. Der Träger wird jedoch nur soweit abgesenkt, daß eine Konsolidierung der zuletzt aufgetragenen Schichten vermieden wird. Die Schichten können in einer Weise aufgetragen werden, um die beabsichtigte Modellkontur zu erhalten. Das Verfahren zeichnet sich also dadurch aus, daß aufgetragene Schichten allmählich in das Konsolidierungsflüssiglceitsbad 3 abgesenkt werden, während der weitere Schichtaufbau oberhalb des Bades 3 fortgeführt wird. Dies führt zu einer festen Verbindung der einzelnen aufgetragenen Schichten und schließlich zu einem gewünschten Formkörper, der für die unterschiedlichen Zwecke Anwendung finden kann.

Sind sämtliche Schichten außerhalb des Konsolidierungsflüssigkeitsbades 3 aufgetragen worden, um den keramischen Formkörper aufzubauen, wird selbstverständlich der gesamte Aufbau abschließend in das Konsolidierungsflüssiglceitsbad 3 abgesenkt, um den gesamten Formkörper zu konsolidieren.

Die in der vorstehenden Beschreibung, in den Ansprüchen sowie in der Zeichnung offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zur Herstellung eines keramischen Formkörpers, welches die Schritte umfaßt:
(i) Auftragen eines flüssigen oder pastösen, keramischen Schlickers mit einem Nanosol als Bestandteil auf einen Träger (1) außerhalb eines Konsolidierungsflüssigkeitsbades;
(ii) zumindest teilweises Absenken des Trägers (1) in das Konsolidierungsflüssigkeitsbad (3), wobei (a) das Konsolidierungsflüssigkeitsbad (3) eine Flüssigkeit mit einem pH-Wert enthält, der zur Konsolidierung des Schlickers zu einem Formkörper führt, oder (b) das Konsolidierungsflüssigkeitsbad (3) eine Flüssigkeit mit einer Temperatur unterhalb des Gefrierpunkts von Wasser enthält, die zum Konsolidieren des Schlickers zu einem Formkörper führt,
wobei der Träger (1) bis zu einer Tiefe in das Konsolidierungsflüssigkeitsbad (3) abgesenkt wird, so daß zumindest ein als erste Arbeitsebene bezeichneter Teil des aufgetragenen Schlickers oberhalb des Konsolidierungsbades (3) unkonsolidiert verbleibt.

2. Verfahren nach Anspruch 1, **dadurch gekennzeichnet, daß** der Schlicker schichtweise aufgetragen wird.

3. Verfahren nach Anspruch 2, **dadurch gekennzeichnet, daß** auf die erste Arbeitsebene eine oder mehrere weitere Schichten des Schlickers aufgetragen werden, die eine oder mehrere neue Arbeitsebene(n) definieren und die erste Arbeitsebene bzw. die nicht obersten Arbeitsebenen in das Konsolidierungsflüssigkeitsbad (3) abgesenkt wird bzw. werden.

4. Verfahren nach einem der vorangehenden Ansprüche, **dadurch gekennzeichnet, daß** der Schlicker durch eine Düse tropfenförmig oder bahnförmig extrudiert wird.

5. Verfahren nach einem der vorangehenden Ansprüche, **dadurch gekennzeichnet, daß** nach Beendigung der Auftragung des Schlickers der Träger (1) zusammen mit dem Schlicker vollständig in das Konsolidierungsflüssigkeitsbad (3) abgesenkt wird.

6. Verfahren nach einem der vorangehenden Ansprüche, **dadurch gekennzeichnet, daß** das Auftragen des Schlickers kontinuierlich oder diskontinuierlich erfolgt.

7. Verfahren nach einem der vorangehenden Ansprüche, **dadurch gekennzeichnet, daß** nach vollständiger Konsolidierung der Formkörper aus dem Konsolidierungsflüssigkeitsbad (3) entfernt und die Konsolidierungsflüssigkeit von dem Formkörper entfernt wird.

8. Verfahren nach Anspruch 7, **dadurch gekennzeichnet, daß** das Entfernen der Konsolidierungsflüssigkeit durch Erwärmen des Formkörpers auf maximal 80°C erfolgt.

9. Verfahren nach einem der vorangehenden Ansprüche, **dadurch gekennzeichnet, daß** der hergestellte Formkörper gesintert wird.

10. Verfahren nach einem der vorangehenden Ansprüche, **dadurch gekennzeichnet, daß** die Teilchen des Nanosols einen Durchmesser von 5 bis 100 nm aufweisen.

11. Verfahren nach einem der vorangehenden Ansprüche, **dadurch gekennzeichnet, daß** die nicht konsolidierte Arbeitsebene oberhalb des Konsolidierungsflüssigkeitsbades (3) eine Dicke von 0,1 mm bis 7 mm aufweist.

12. Verfahren nach einem der vorangehenden Ansprüche, **dadurch gekennzeichnet, daß** die Temperatur der Konsolidierungsflüssigkeit in (b) -5°C bis -40°C beträgt.

13. Verfahren nach einem der vorangehenden Ansprüche 1 bis 11, **dadurch gekennzeichnet, daß** in (a) die Konsolidierungsflüssigkeit einen pH-Wert aufweist, der um mindestens 2,0 Punkte niedriger ist als der pH-Wert des Schlickers.

## Claims

1. Method for the production of a ceramic moulded body, comprising the steps of:
(i) applying a fluid or pasty ceramic slip with a nanosol as a component to a support (1) outside a consolidating fluid bath;
(ii) at least partially lowering the support (1) into the consolidating fluid bath (3), wherein (a) the consolidating fluid bath (3) contains a fluid with a pH value that leads to the consolidation of the slip to give a moulded body, or (b) the consolidating fluid bath (3) contains a fluid with a temperature below the freezing point of water, which leads to the consolidation of the slip to give a moulded body,
wherein the support (1) is lowered to a depth in the consolidating fluid bath (3) such that at least one applied slip part designated as the first working level remains unconsolidated above the consolidating bath (3).

2. Method according to Claim 1, **characterised in that** the slip is applied in layers.

3. Method according to Claim 2, **characterised in that** one or more further layers of the slip are applied to the first working level, which layers define one or more new working levels and the first working level or the working levels that are not topmost is/are lowered into the consolidating fluid bath (3).

4. Method according to one of the preceding claims, **characterised in that** the slip is extruded through a nozzle in drops or strips.

5. Method according to one of the preceding claims, **characterised in that**, once the application of the slip has ended, the support (1) together with the slip is lowered completely into the consolidating fluid bath (3).

6. Method according to one of the preceding claims, **characterised in that** the slip is applied continuously or discontinuously.

7. Method according to one of the preceding claims, **characterised in that**, following complete consolidation, the moulded body is removed from the consolidating fluid bath (3) and the consolidating fluid is removed from the moulded body.

8. Method according to Claim 7, **characterised in that** the removal of the consolidating fluid occurs by heating the moulded body to a maximum of 80°.

9. Method according to one of the preceding claims, **characterised in that** the produced moulded body is sintered.

10. Method according to one of the preceding claims, **characterised in that** the particles of the nanosol have a diameter of 5-100 nm.

11. Method according to one of the preceding claims, **characterised in that** the non-consolidated working level above the consolidating fluid bath (3) has a thickness of 0.1 mm to 7 mm.

12. Method according to one of the preceding claims, **characterised in that** the temperature of the consolidating fluid in (b) is -5°C to -40°C.

13. Method according to one of preceding claims 1-11, **characterised in that** in (a) the consolidating fluid has a pH value which is at least 2.0 points lower than the pH value of the slip.

## Revendications

1. Procédé de réalisation d'un corps moulé en céramique, comprenant les étapes suivantes :
(i) application d'une barbotine céramique liquide ou pâteuse contenant un nanosol comme ingrédient sur un support (1) à l'extérieur d'un bain liquide de consolidation;
(ii) abaissement au moins partiel du support (1) dans le bain liquide de consolidation (3), (a) le bain liquide de consolidation (3) contenant un liquide ayant une valeur pH qui conduit à la consolidation de la barbotine pour former un corps moulé, ou (b) le bain liquide de consolidation (3) contenant un liquide ayant une température inférieure au point de congélation de l'eau, qui conduit à la consolidation de la barbotine pour former un corps moulé,
le support (1) étant abaissé dans le bain liquide de consolidation (3) jusqu'à une profondeur telle qu'au moins une partie de la barbotine appliquée, désignée comme premier plan de travail, au-dessus du bain de consolidation (3) demeure non consolidée.

2. Procédé selon la revendication 1, **caractérisé en ce que** la barbotine est appliquée par couches.

3. Procédé selon la revendication 2, **caractérisé en ce que** sont appliquées sur le premier plan de travail une ou plusieurs couches supplémentaires de barbotine qui définissent un ou plusieurs nouveau(x) plan(s)de travail et **en ce que** le premier plan de travail ou les plans de travail qui ne sont pas les plus supérieurs est/sont abaissés dans le bain liquide de consolidation (3).

4. Procédé selon l'une des revendications précédentes, **caractérisé en ce que** la barbotine est extrudée en forme de goutte ou de ruban à travers une buse.

5. Procédé selon l'une des revendications précédentes, **caractérisé en ce qu'**après la fin de l'application de la barbotine, le support (1) avec la barbotine est abaissé entièrement dans le bain liquide de consolidation (3).

6. Procédé selon l'une des revendications précédentes, **caractérisé en ce que** l'application de la barbotine s'effectue de manière continue ou discontinue.

7. Procédé selon l'une des revendications précédentes, **caractérisé en ce qu'**après consolidation complète le corps moulé est extrait du bain liquide de consolidation (3) et le liquide de consolidation est éliminé du corps moulé.

8. Procédé selon la revendication 7, **caractérisé en ce que** l'élimination du liquide de consolidation s'opère par réchauffage du corps moulé à une température maximale de 80°C.

9. Procédé selon l'une des revendications précédentes, **caractérisé en ce que** le corps moulé fabriqué est fritté.

10. Procédé selon l'une des revendications précédentes, **caractérisé en ce que** les particules du nanosol présentent un diamètre de 5 à 100 nm.

11. Procédé selon l'une des revendications précédentes, **caractérisé en ce que** le plan de travail non consolidé au-dessus du bain liquide de consolidation (3) présente une épaisseur de 0,1 mm à 7 mm.

12. Procédé selon l'une des revendications précédentes, **caractérisé en ce que** la température du liquide de consolidation en (b) est comprise entre - 5°C et - 40°C.

13. Procédé selon l'une des revendications précédentes 1 à 11, **caractérisé en ce qu'**en (a) le liquide de consolidation présente une valeur pH qui est inférieure d'au moins 2,0 points à la valeur pH de la barbotine.
